**Europäisches Patentamt**

**European Patent Office**

**Office européen des brevets**

(19)

(11) Veröffentlichungsnummer: **0 309 443 B1**

## (12) EUROPÄISCHE PATENTSCHRIFT

(45) Veröffentlichungstag der Patentschrift:
14.08.91 Patentblatt 91/33

(51) Int. Cl.⁵: **F16K 11/074**

(21) Anmeldenummer: **88890245.9**

(22) Anmeldetag: **26.09.88**

(54) **Sanitäres Wasserventil mit in einem Gehäuse parallel zueinaderliegenden Ventilscheiben.**

(30) Priorität: **24.09.87 AT 2428/87**

(43) Veröffentlichungstag der Anmeldung:
**29.03.89 Patentblatt 89/13**

(45) Bekanntmachung des Hinweises auf die
Patenterteilung:
**14.08.91 Patentblatt 91/33**

(84) Benannte Vertragsstaaten:
**AT BE CH DE ES FR GB GR IT LI NL SE**

(56) Entgegenhaltungen:
**EP-A- 0 162 342**
**DE-A- 2 609 170**
**US-A- 3 390 701**

(73) Patentinhaber: **IDEAL-STANDARD GMBH**
**Euskirchener Strasse 80**
**W-5300 Bonn 1 (DE)**

(72) Erfinder: **Dagiantis, Christos**
**Alamanas 39**
**Athen (GR)**

(74) Vertreter: **Puchberger, Rolf, Dipl. Ing. et al**
**Patentanwälte, Dipl. Ing. Georg Puchberger**
**Dipl. Ing. Rolf Puchberger Dipl. Ing. Peter**
**Puchberger Singerstrasse 13 Postfach 55**
**A-1010 Wien (AT)**

## Beschreibung

Die Erfindung betrifft ein sanitäres Wasserventil mit in einem Gehäuse parallel zueinanderliegenden Ventilscheiben, von denen mindestens eine drehfest angeordnet ist, Wassereinlaßöffnungen und mindestens eine Wasserauslaßöffnung hat, und eine andere Ventilscheibe einen Oberflächenkanal für Umlenkfunktionen aufweist.

In vielen Fällen ist es notwendig, Kalt- und Warmwasser zu mischen und dann einer von mehreren Entnahmestellen zuzuführen. Im allgemeinen ist es üblich, die Umschaltung zwischen den Entnahmestellen außerhalb des eigentlichen sanitären Wasserventiles vorzusehen, z.B. durch einen Hebel, der an einer Verzweigungsstelle eine Zuführungsleitung schließt und eine andere öffnet, oder über einen Zugknopf und dgl. Derartige getrennte Umschaltvorrichtungen hat man auch bei Einhebelmischern verwendet. Die vorliegende Erfindung befaßt sich mit der Integration der Umschaltung in das eigentliche sanitäre Wasserventil. Bei den Einhebelmischern haben sich jene der Art durchgesetzt, bei denen in einer Kartusche Keramikscheiben angeordnet werden, die aufeinander verschiebbar sind. Aus der EP-A-162342 ist bereits eine Einhebelmischarmatur bekannt, bei der die Öffnungsbereiche einer festen Steuerscheibe und die Steuerkanten der bewegbaren Steuerscheibe derart ausgebildet sind, daß der Steuerscheibeneinsatz zwei vollständige, getrennte unabhängig voneinander arbeitende, aber mechanisch gekoppelte Steuerungen aufweist. Beide Steuerungen können auch für getrennte Wasserauslässe verwendet werden. Die Steuerungen sind jedoch nicht exakt genug und entsprechen nicht den Anforderungen der Praxis.

Die vorliegende Erfindung hat die Aufgabe, ein derartiges, sanitäres Wasserventil mit Keramikscheiben zu verbessern und es zu ermöglichen, daß die Umschaltung zwischen mehreren Wasserentnahmestellen bei der Betätigung des Hebels, der auch zur Einstellung des Mischverhältnisses zwischen warmem und kaltem Wasser dient, ermöglicht wird.

Erfindungsgemäß wird jetzt vorgeschlagen, die Aufgaben, wie in Anspruch 1 sowie Anspruch 2 dargelegt, zu lösen.

Es ist also ein System geschaffen worden, bei dem in einer Kartusche kaltes und warmes Wasser gemischt werden und abhängig von der Hebelstellung mehrere Entnahmestellen versorgt werden können. Dadurch kann eine zusätzliche Umschaltung, z.B. zwischen Wanne und Dusche, Waschtisch und Spülbrause, Bidet und Unterdusche, Waschtisch und Munddusche usw. entfallen. Das System ist auch als Vierwegeumschaltung denkbar.

Die Erfindung wird in den Zeichnungen beispielsweise näher dargestellt. Fig. 1 zeigt ein sanitäres Wasserventil ; die Fig. 2, 3 und 4 zeigen verschiedene Stellungen einer beweglichen Ventilscheibe und damit die Wasserzufuhr zu verschiedenen Entnahmestellen. Die Fig. 5, 6 und 7 zeigen ein erstes Ausführungsbeispiel der Erfindung. Die Fig. 8, 9 und 10 ein weiteres Ausführungsbeispiel der Erfindung. Die Fig. 11 und 12 zeigen Möglichkeiten einer Arretierung der Mittelstellung eines Betätigungshebels, Fig. 13 eine andere Möglichkeit einer Arretierung des Bedienungshebels, Fig. 14 eine Unteransicht auf die ortsfest angeordnete Ventilscheibe, Fig. 15 eine Unteransicht auf eine verschiebbare Ventilscheibe, Fig. 16 eine Unteransicht einer weiteren, ortsfesten Keramikventilscheibe, Fig. 17 zeigt die gegenseitigen Lagen zweier Keramikventilscheiben in einer Umschaltstellung des sanitären Wasserventiles und Fig. 18 die gegenseitige Lage der Ventilscheiben in einer anderen Umschaltstellung des sanitären Wasserventiles.

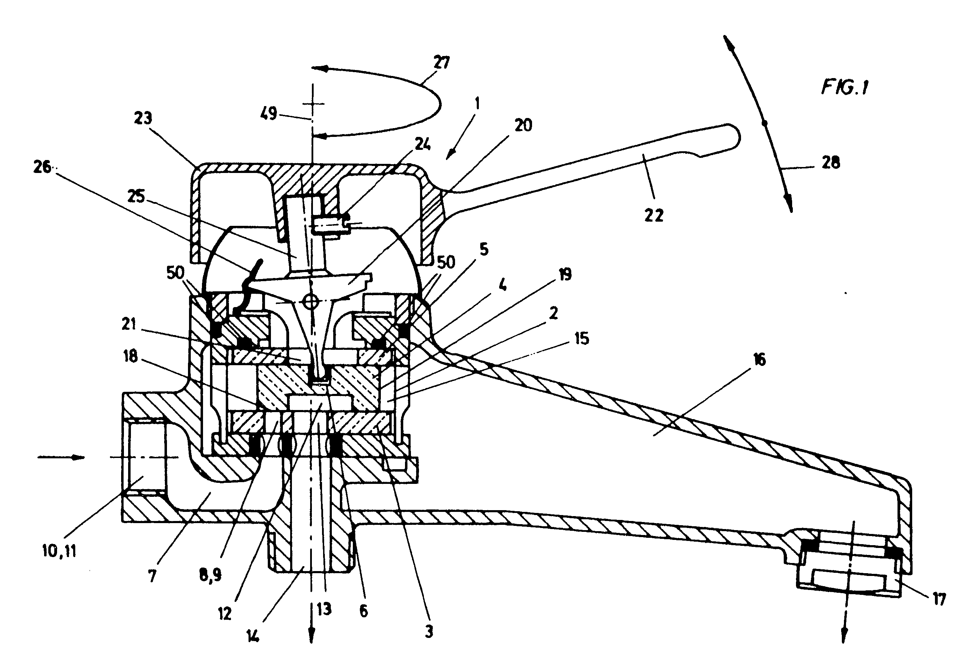

Das sanitäre Wasserventil 1 gemäß Fig. 1 besitzt ein kartuschenartiges Gehäuse 2, in dem mehrere Ventilscheiben 3, 4, 5 hintereinander angeordnet sind. Die erste Ventilscheibe 3 ist drehfest angeordnet und mit Einlaßöffnungen 8, 9 versehen. Diese Einlaßöffnungen 8, 9 sind über einen Kanal 7 mit einer Zufuhr 10, 11 für kaltes bzw. warmes Wasser verbunden. Auf dieser ersten, drehfesten Ventilscheibe 3 ist eine zweite Ventilscheibe 4 beweglich angeordnet und weist einen Oberflächenkanal 12 auf, der die Einlaßöffnungen 8, 9 mit einer Auslaßöffnung 13 verbinden kann, die über einen Anschluß 14 zu einer Wasserentnahmestelle, z.B. einer Dusche, führen kann. Auf ihrer oberen Fläche trägt diese zweite bewegliche Ventilscheibe eine Ausnehmung 6, in die das Ende eines Hebels 20 eingreift. Zusätzlich gleitet die obere Fläche dieser beweglichen Ventilscheibe 4 an einer weiteren drehfesten Scheibe 5, die zum Durchtritt des Hebels 20 eine Öffnung 21 aufweist. Der Hebel 20 trägt einen Ansatz 25, der über eine Fixierschraube 24 mit einer Kappe 23 fest verbunden ist. Zum Bewegen der Kappe 23 ist ein Griff 22 vorgesehen, wobei die Kappe entsprechend des Pfeiles 27 bzw. des Pfeiles 28 bewegt werden kann, und gemeinsam mit der Kappe selbstverständlich dann auch der Hebel 20. Dieser Hebel 20 hat einen leichten Winkel zur Vertikalen.

In Fig. 1 ist die bewegliche Scheibe 4 in einer Lage, bei der der Zufluß von Wasser über die Einlaßöffnungen 8, 9 durch die Stegfläche 18 verhindert wird, gezeigt. Wird nun der Griff 22 entsprechend des Pfeiles 28 nach oben bewegt, so verschiebt sich die Ventilscheibe 4 in Fig. 1 nach rechts und die Einlaßöffnungen 8 und 9 münden in einen Mischungsraum 15, der mit dem Auslauf 16 verbunden ist. Der Auslauf trägt an seinem Ende in üblicher Weise einen Perlator 17 und kann als Wanneneinfüllvorrichtung dienen. Der Mischungsraum 15 wird durch die Seitenfläche 19, die untere Fläche der oberen Scheibe 5 und die obere Fläche der unteren Scheibe 3 gebildet.

Wird der Griff 22 entsprechend des Pfeiles 28 nach unten bewegt, so sind die Einlaßöffnungen 8, 9 über den Oberflächenkanal 12, der als Umlenkkammer dient, mit der Auslaßöffnung 13 verbunden und das Wasser fließt somit zu einer anderen Entnahmestelle, z.B. zu einer Dusche. Um das Mischungsverhältnis des Wassers, d.h. dessen Temperatur, zu regeln, wird der Griff 22 samt Kappe 23 um die Achse 49 verdreht.

Ein Ende des Hebels 20 wird von einer lösbaren Arretierung 26 gehalten, die den Hebel 20 in seiner Mittelstellung hält, d.h. in der geschlossenen Lage des sanitären Wasserventiles. Die Dichtungen 50 gewährleisten, daß Wasser nur über den Auslauf 16 bzw. den Anschluß 14 abgeleitet werden kann.

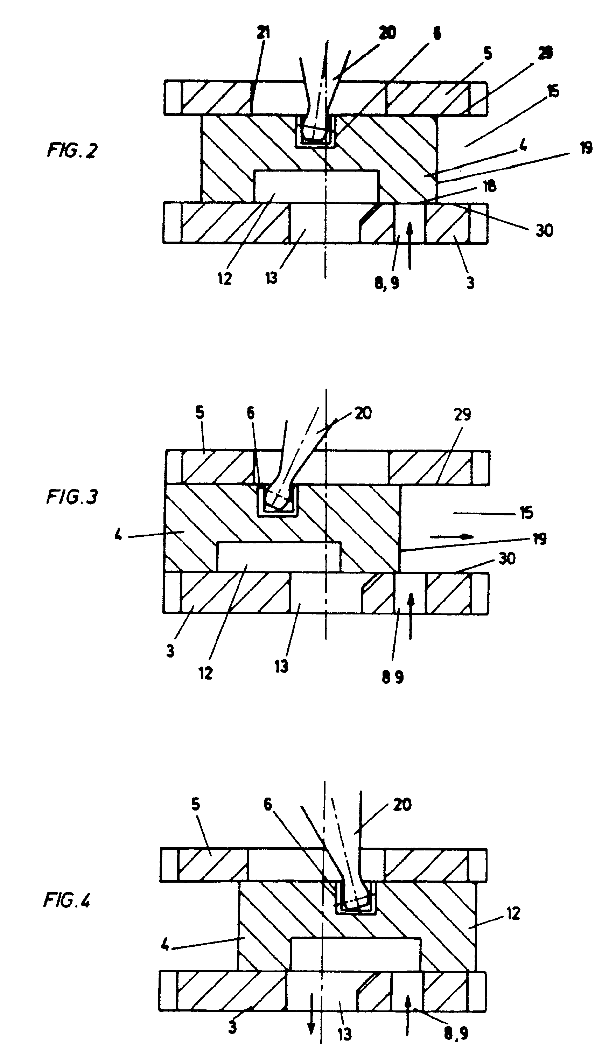

In den Fig. 2, 3 und 4 sind verschiedene Stellungen der beweglichen Ventilscheibe 4 hinsichtlich der beiden ortsfesten Ventilscheiben 3 und 5 gemäß Fig. 1 dargestellt. Fig. 2 zeigt wieder die geschlossene Stellung des Ventiles, d.h. die Einlaßöffnungen 8, 9 sind durch den Steg 18 an der Ventilscheibe 4 gesperrt und Wasser kann weder in den Umlenkkanal 12 noch in den Mischungsraum 15 eintreten. Der Hebel 20 zum Bewegen der beweglichen Ventilscheibe 4 tritt durch die Öffnung 21 in der oberen Ventilscheibe 5 hindurch und greift in die Ausnehmung 6 ein. Wird die Ventilscheibe, nunmehr in Fig. 3 dargestellt, nach links bewegt, so kann warmes und kaltes Wasser durch die Einlaßöffnungen 8, 9 in den Mischungsraum 15 eintreten, der durch die Seitenfläche 19 der beweglichen Ventilscheibe 4, die obere Fläche 30 der unteren ortsfesten Ventilscheibe 3 und der unteren Fläche 29 der oberen ortsfesten Ventilscheibe 5 begrenzt wird. Aus diesem Mischungsraum fließt dann das Wasser zu einer Wasserentnahmestelle ab. In Fig. 4 ist jetzt die bewegliche Ventilscheibe 4 nach rechts bewegt und somit sind die Einlaßöffnungen 8, 9 über den Umlenkkanal 12 mit der Auslaßöffnung 13 verbunden. Von der Auslaßöffnung 13 fließt das Wasser dann zu einer weiteren Wasserentnahmestelle.

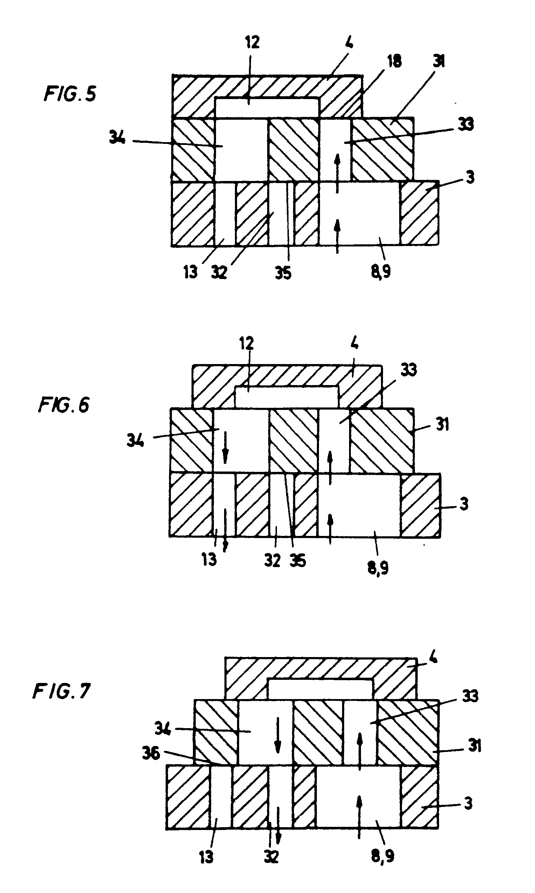

In den Fig. 5, 6 und 7 ist eine erste Ausführungsform der Erfindung dargestellt. Die untere, ortsfeste Ventilscheibe 3 hat hier neben der Auslaßöffnung 13 noch eine weitere Auslaßöffnung 32 und zwischen der ortsfesten Ventilscheibe 3 und der beweglichen, den Umlenkkanal 12 aufweisenden Ventilscheibe 4 ist noch eine zusätliche, bewegliche Ventilscheibe 31 vorhanden. Diese Ventilscheibe 31 besitzt eine schlitzförmige Öffnung 33 für das eintretende Wasser und eine schlitzförmige Öffnung 34 für das austretende Wasser. In Fig. 5 ist wiederum die geschlossene Stellung des sanitären Wasserventiles dargestellt. Man sieht, daß der Steg 18 der beweglichen Ventilscheibe 4 die Wassereinlaßöffnung 33 in der mittleren Ventilscheibe 31 verschließt und so kein Wasser zu den Auslaßöffnungen 13 und 32 gelangen kann. Gemäß Fig. 6 ist die obere bewegliche Ventilscheibe 4 nach rechts verschoben und das eintretende Wasser kann über die Einlaßöffnung 33 in der mittleren Ventilscheibe 31 in den Umlenkkanal 12 gelangen, von wo es über die Auslaßöffnung 34 entweder zur Auslaßöffnung 13 oder zur Auslaßöffnung 32 in der ortsfesten Scheibe 3 gelangen kann. Gemäß Fig. 6 ist durch den Steg 35 der mittleren Ventilscheibe 31 die Austrittsöffnung 32 gesperrt und das Wasser muß über die Auslaßöffnung 13 abfließen. In Fig. 7 ist dann die andere Stellung gezeigt. Hier ist durch den Steg 36 der mittleren Scheibe 31 die Auslaßöffnung 13 gesperrt und das Wasser muß über die Auslaßöffnung 32 abfließen. Mit den Auslaßöffnungen 13 bzw. 32 ist dann jeweils eine Wasserentnahmestelle, also eine Wannenfülleinrichtung bzw. die Dusche verbunden.

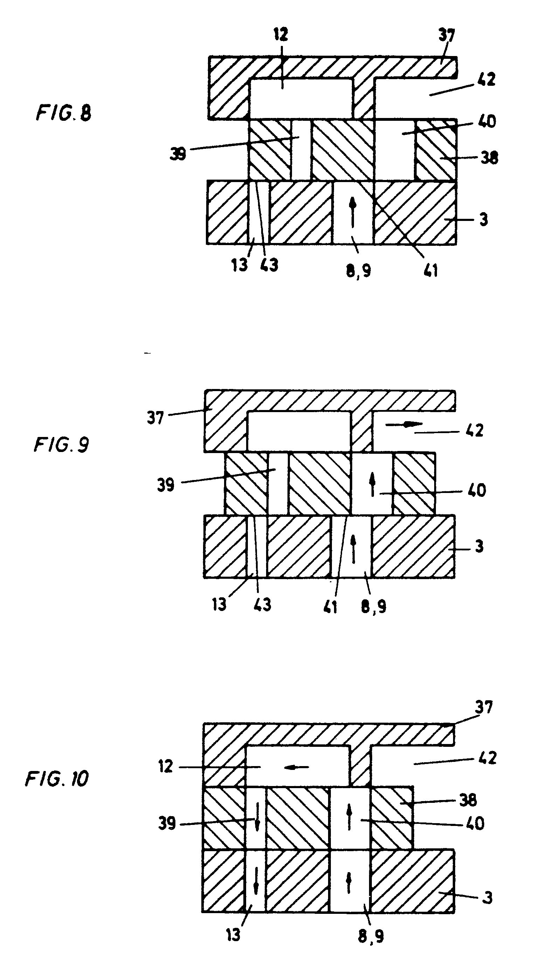

In den Fig. 8, 9 und 10 ist eine andere Ausführungsform der Erfindung dargestellt, wobei auf der ortsfesten Ventilscheibe 3 eine bewegliche Ventilscheibe 38 mit Wassereinlaßöffnungen 40 und Wasserauslaßöffnungen 39 vorhanden ist. Auf dieser beweglichen Scheibe 38 ruht dann eine ortsfeste Scheibe 37, die wiederum einen Umlenkkanal 12 aufweist. Fig. 8 zeigt die geschlossene Stellung des sanitären Wasserventiles. Hier ist durch den Steg 41 der beweglichen Ventilscheibe 38 der Wassereintritt über die Einlaßöffnung 8 und 9 verhindert. Gemäß Fig. 9 ist die bewegliche Ventilscheibe 38 etwas nach links verschoben, wodurch die Einlaßöffnungen 8 und 9 in der festen Ventilscheibe 3 über die Wassereinlaßöffnung 40 in der beweglichen Ventilscheibe 38 mit einem Mischungsraum 42 in der obersten Ventilscheibe 37 verbunden sind. Dieser Mischungsraum 42 ist dann mit einer Wasserentnahmestelle verbunden. Wird die Ventilscheibe 38 noch weiter nach links verschoben, so wird die Wassereinlaßöffnung 40 mit dem Umlenkkanal 12 verbunden, der Austritt zum Mischungsraum 42 hingegen gesperrt. Das Wasser muß jetzt über diesen Umlenkkanal 12 über die Wasserauslaßöffnung 39 und dann 13 zu der zweiten Wasserentnahmestelle fließen.

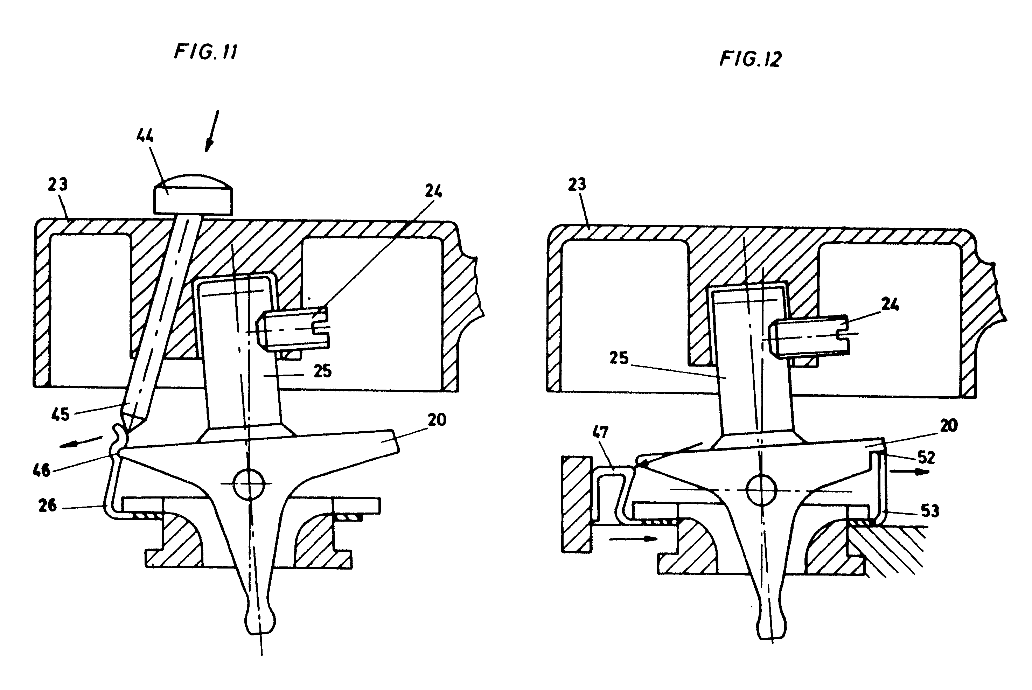

Wie bereits in Fig. 1 angedeutet, ist eine Arretierung 26 für den Hebel 20 vorgesehen, einerseits um das sanitäre Wasserventil in seiner geschlossenen Stellung zu halten und andererseits um der Bedienungsperson anzuzeigen, wenn das sanitäre Wasserventil von einer Wasserentnahmestelle auf die andere geschaltet wird. Gemäß Fig. 11 ist eine Feder 26 vorgesehen, die eine Kerbe 46 aufweist, in die ein Ende des Hebels 20 eingreift. An der Feder 26 liegt ein Stift 45 an, der in diesem Fall hier die Kappe 23 durchsetzt und an seinem oberen Ende einen Kopf 44 trägt. Durch Drücken dieses Kopfes 44 wird die Kerbe 46 vom Hebel 20 gelöst, so daß dann ohne Schwierigkeit die Kappe 23 und damit über die Verbindung der Fixierschraube 24 mit dem Ansatz 25 der Hebel 20 frei wird.

Eine andere Möglichkeit der Arretierung zeigt Fig. 12. Hier ist ein Ende des Hebels 20 mit einer Stufe 52 versehen und in der Mittelstellung liegt die Stufe 52 auf einer Abstützung 53 und das entgegengesetzte Ende des Hebels 20 liegt an einer Feder 47 an. Die Abstützung 53 und die Feder 47 sind fest miteinander verbunden oder aus einem Teil, wobei diese Einheit aus Abstützung und Feder um einen Betrag verschiebbar ist, der notwendig ist, um die Stufe 52 des Hebels 20 freizugeben. Wenn der Hebel 20 gekippt wird, so wird die Feder 47 durch den Hebel 20 zusammengedrückt und somit die Abstützung 53 unter die Stufe 52 des Hebels 20 gebracht. Durch die Klemmkraft, die durch den Schließvorgang auf die Einheit aus Feder und Abstützung ausgeübt wird, verweilt diese in der Anschlagsposition und verhindert ein Durchschalten auf eine andere Wasserentnahmestelle. Nach Loslassen des Griffes wird die Arretierung durch die Feder 47 wieder zurückbewegt und entriegelt und die Bedienungsperson ist daher in der Lage, wahlweise die eine oder die andere Wasserentnahmestelle zu öffnen.

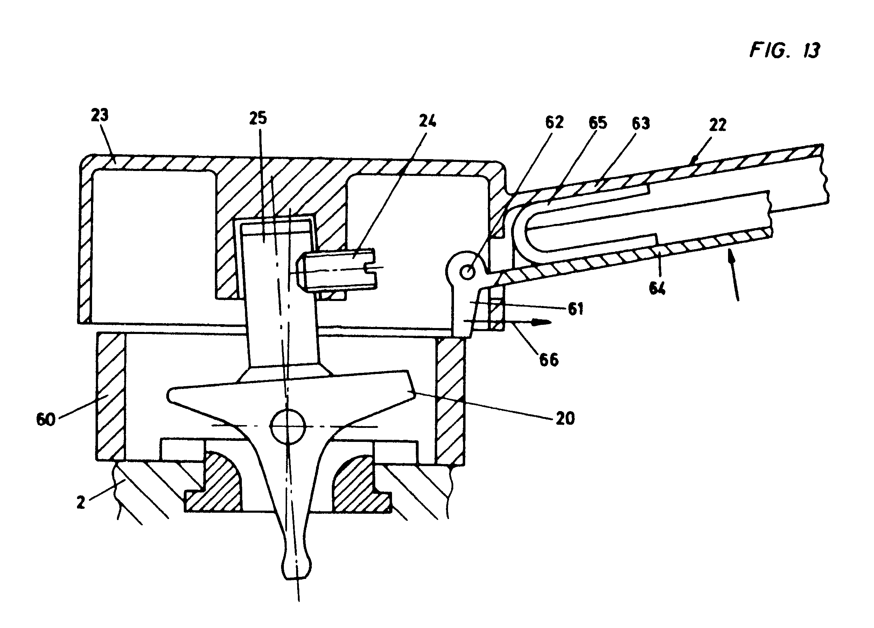

In Fig. 13 ist eine weitere Möglichkeit einer Arretierung des Bedienungshebels dargestellt. Zwischen der Kappe 23 mit dem Griffhebel 22 und dem oberen Teil des kartuschenartigen Gehäuses 2 ist zum Schutz des Hebels 20 eine Hülse 60 vorgesehen. Diese Hülse wird zur Abstützung eines Hebels 61 verwendet, der um die Achse 62 verschwenkbar in der Kappe 23 gelagert ist. Der Griff 22 zum Bewegen der Kappe 23 besteht hier aus einem oberen, starr mit der Kappe verbundenen Teil 63 und einem unteren Teil 64, der mit dem Hebel 61 verbunden ist und gegenüber dem oberen Griffteil 63 beweglich ist. Zwischen dem oberen Griffteil 63 und dem unteren Griffteil 64 ist eine Feder 65 vorhanden, die diese beiden Griffteile 63 und 64 in einem vorgegebenen Abstand hält. Es ist nun möglich, durch Zusammendrücken der beiden Griffteile 63 und 64 den Hebel 61 in Richtung des Pfeiles 66 wegzuschwenken und somit die Arretierung zu lösen.

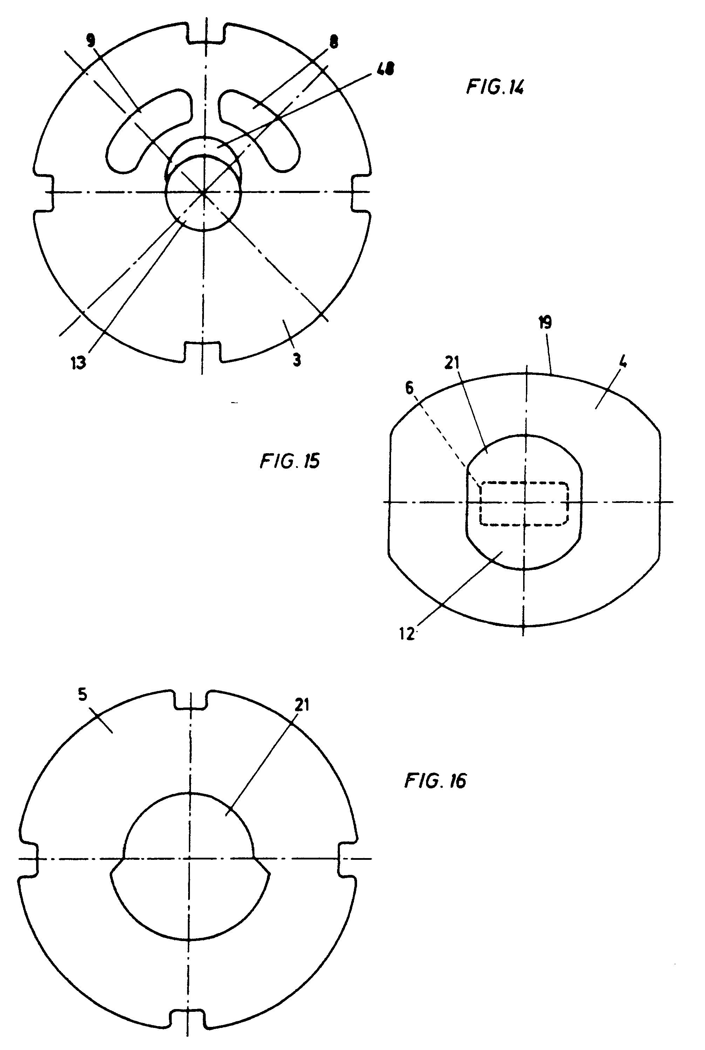

Die Fig. 14 zeigt eine Draufsicht auf die ortsfeste Ventilscheibe 3, wie sie in Fig. 1 verwendet wird. Die Scheibe hat eine bogenförmige Einlaßöffnung 8 für kaltes Wasser und eine gebogene Einlaßöffnung 9 für warmes Wasser. Hier ist eine Auslaßöffnung 13, die, wie man aus den Fig. 2, 3 und 4 erkennen kann, angeflanscht ist, und zwar am besten unter einem Winkel von 45°.

Fig. 15 zeigt eine Untersicht der beweglichen Ventilscheibe 4 mit dem Umlenkkanal 12 und der Begrenzungsfläche 19 für den Mischungsraum 15, der dann zur anderen Wasserentnahmestelle führt.

Fig. 16 zeigt schließlich eine Unteransicht der oberen ortsfesten Ventilscheibe 5 gemäß Fig. 1. Man sieht, daß hier die Durchtrittsöffnungen 21 für den Hebel 20 durch zwei halbkreisförmige Öffnungen mit verschiedenen Durchmessern gebildet wird, wobei die Enden dieser beiden Halbkreise durch eine Schrägfläche miteinander verbunden sind.

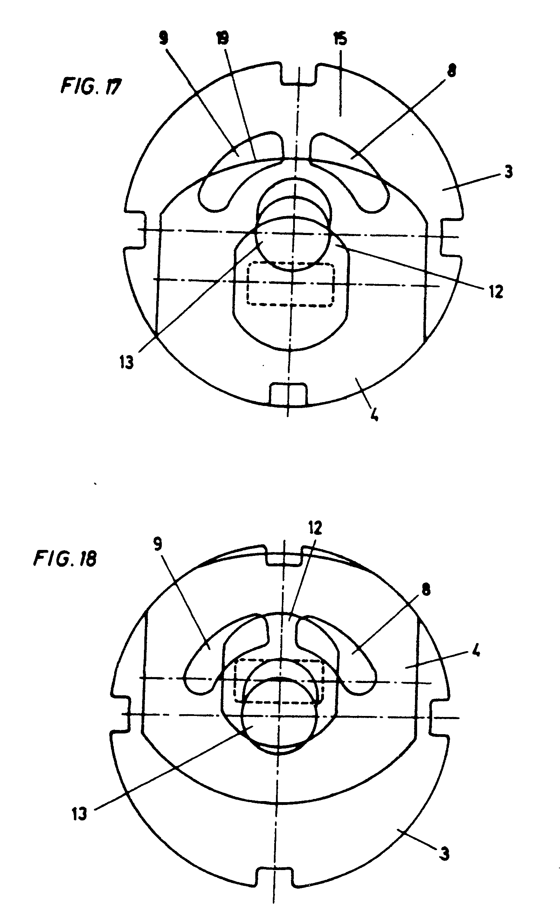

Fig. 17 zeigt die Lage der beiden Ventilscheiben 3 und 4 von unten gesehen, wobei hier Mischwasser zu einer Wasserentnahmestelle geführt wird, z.B. um eine Badewanne zu füllen. Man sieht, daß die Seitenfläche 19 der beweglichen Scheibe 4 über den Wassereinlaßöffnungen 8 und 9 liegt und daher das Wasser in den Raum 15 vor dieser Seitenfläche eintreten kann. Das Wasser wird hier gemischt und fließt dann zu der Wasserentnahmestelle. Da der Umlenkkanal 12 nicht oberhalb der Wassereintrittsöffnungen 8 und 9 liegt, kann Wasser nicht zur Austrittsöffnung 13 gelangen. In Fig. 18 ist nunmehr die andere Stellung dargestellt. Hier verbindet der Umlenkkanal 12 die Wassereintrittsöffnungen 8 und 9 mit der Austrittsöffnung 13 und es ist nicht möglich, daß Wasser in den Mischungsraum 15 und somit zur anderen Wasserentnahmestelle gelangt.

Die Bedienung eines sanitären Wasserventiles gemäß Fig. 1 ist sehr einfach. Durch Anheben des Griffes 22 und damit des Hebels 20 aus der Mittelposition wird der Wanneneinlaß geöffnet. Durch Drehen des Griffes 22 wird die Mischtemperatur geregelt. Durch Drücken des Hebels 20 aus der Mittelposition wird das Wasser zur Dusche geleitet und die Mischtemperatur wird ebenfalls durch Drehen des Griffes 22 geregelt. Mit Hilfe des Einrastsystems 26 wird die Mittellage des Hebels 20 gewährleistet und ein ungewolltes Öffnen, z.B. der Dusche beim Schließen des Wanneneinlaufes, wird vermieden.

## Patentansprüche

1. Sanitäres Wasserventil mit in einem Gehäuse parallel zueinanderliegenden Ventilscheiben (3, 4, 31), von denen mindestens eine (3) drehfest angeordnet ist, Wassereinlaßöffnungen (8, 9) und mindestens eine Wasserauslaßöffnung (13) hat, und eine andere Ventilscheibe (4) einen Oberflächenkanal (12) für Umlenkfunktionen aufweist, dadurch gekennzeichnet, daß die feste Ventilscheibe (3) mehrere Wasserauslaßöffnungen (13, 32) aufweist, die jeweils mit einer Wasserentnahmestelle verbunden sind, daß auf der festen Ventilscheibe (3) verschieblich eine weitere, mit Wasserdurchlaßöffnungen (33, 34) versehene Ventilscheibe (31) ruht und auf dieser dann verschieblich die mit dem Oberflächenkanal (12) versehene Ventilscheibe (4) angeordnet ist, wobei letztere Ventilscheibe (4) einen Steg (18) zum Abdecken der Wasserdurchtrittsöffnungen (33) für das zulaufende Wasser und die mittlere Ventilscheibe (31) Stege (35, 36) zum Abdecken der jeweils gesperrten Wasserauslaßöffnungen (13, 32) hat (Fig. 5, 6, 7).

2. Sanitäres Wasserventil mit in einem Gehäuse parallel zueinanderliegenden Ventilscheiben (3, 37, 38), von denen mindestens eine (3) drehfest angeordnet ist, Wassereinlaßöffnungen (8, 9) und mindestens eine Wasserauslaßöffnung (13) hat, und eine andere Ventilscheibe (37) einen Oberflächenkanal (12) für Umlenkfunktionen aufweist, dadurch gekennzeichnet, daß auf der festen Ventilscheibe (3) verschieblich eine weitere, mit Wasserdurchtrittsöffnungen (39, 40) versehene Ventilscheibe (38) ruht und dieser die ortsfest angeordnete, mit dem Oberflächenkanal (12) versehene Ventilscheibe (37) zugeordnet ist, die mit einer weiteren Mischkammer (42) versehen ist, wobei die bewegliche Venteilscheibe (38) einen Steg (41) zum Abdecken der Wassereinlaßöffnungen (8, 9) hat (Fig. 8, 9, 10).

3. Sanitäres Wasserventil nach Anspruch 1, dadurch gekennzeichnet, daß für den die bewegliche Ventilscheibe (4) verschiebenden Hebel (20) eine Arretierung (26) vorgesehen ist.

4. Sanitäres Wasserventil nach Anspruch 3, dadurch gekennzeichnet, daß die Arretierung (26) durch eine Feder mit einer Kerbe (46) gegeben ist, in die ein Flansch des Hebels eingreift.

5. Sanitäres Wasserventil nach Anspruch 4, dadurch gekennzeichnet, daß an der Feder (26) ein Stift (45) anliegt, dessen Bewegung die Feder (26) aus ihrer Ruhelage drückt.

6. Sanitäres Wasserventil nach Anspruch 3, dadurch gekennzeichnet, daß die Arretierung durch eine Feder (47) mit einer Nase gebildet wird, an der eine Nase des die bewegliche Ventilscheibe verschiebenden Hebels (20) anliegt.

**Claims**

1. A sanitary water valve comprising valve discs (3, 4, 31) which are disposed in mutually parallel relationship in a housing and of which at least one (3) is arranged non-rotatably and has water inlet openings (8, 9) and at least one water outlet opening (13), and another valve disc (4) has a surface passage (12) for direction-changing functions characterised in that the fixed valve disc (3) has a plurality of water outlet openings (13, 32) which are each connected to a water supply location, that a further valve disc (31) provided with water passage openings (33, 34) rests displaceably on the fixed valve disc (3) and then the further valve disc (4) which is provided with the surface passage (12) is arranged displaceably on the valve disc (31), wherein the valve disc (4) has a land (18) for covering over the water passage openings (33) for the incoming water and the central valve disc (31) has lands (35, 36) for covering over the respective closed water outlet openings (13, 32) (Figures 5, 6 and 7).

2. A sanitary water valve comprising valve discs (3, 37, 38) which are disposed in mutually parallel relationship in a housing and of which at least one valve disc (3) is arranged non-rotatably and has water inlet openings (8, 9) and at least one water outlet opening (13) and another valve disc (37) has a surface passage (12) for direction-changing functions characterised in that a further valve disc (38) provided with water passage openings (39, 40) rests displaceably on the fixed valve disc (3) and associated with the valve disc (38) is the stationarily disposed valve disc (37) which is provided with the surface passage (12) and which is provided with a further mixing chamber (42), wherein the movable valve disc (38) has a land (41) for covering over the water inlet openings (8, 9) (Figures 8, 9 and 10).

3. A sanitary water valve according to claim 1 characterised in that an arresting means (26) is provided for the lever (20) for displacing the movable valve disc (4).

4. A sanitary water valve according to claim 3 characterised in that the arresting means (26) is provided by a spring having a notch (46) into which a flange of the lever engages.

5. A sanitary water valve according to claim 4 characterised in that a pin (45) bears against the spring (26), the movement of the pin (45) urging the spring (26) out of its rest position.

6. A sanitary water valve according to claim 3 characterised in that the arresting means is formed by a spring (47) having a projection against which bears a projection of the lever (20) which displaces the movable valve disc.

**Revendications**

1. Robinet sanitaire, comprenant des plaques d'obturation parallèles (3, 4, 31) dans un bâti dont au moins l'une (3) est bloquée en rotation, des orifices d'entrée d'eau (8, 9) et au moins un orifice de sortie d'eau (13), et une autre plaque d'obturation (4) qui présente en surface un canal (12) prévu pour assurer des fonctions d'inversion, caractérisé en ce que la plaque fixe (3) est pourvue de plusieurs orifices de sortie d'eau (13, 32) qui sont reliés chacun à un poste de prélèvement d'eau, en ce qu'une autre plaque d'obturation (31) pourvue de trous de passage pour l'eau (33, 34) est montée en appui sur la plaque fixe (3) de manière à pouvoir coulisser sur celle-ci, et en ce que la plaque d'obturation (4) dont la surface présente le canal (12) est montée à son tour sur cette plaque supplémentaire (31) de manière à pouvoir coulisser sur cette plaque, cette dernière plaque (4) présentant une barrette (18) pour recouvrir les trous de passage de l'eau (33) pour l'arrivée de celle-ci, et la plaque d'obturation médiane (31) présentant des barrettes (35, 36) pour recouvrir et obturer respectivement les orifices de sortie d'eau (13, 32) (Figs. 5, 6, 7).

2. Robinet sanitaire, comprenant des plaques d'obturation parallèles (3, 37, 38) dans un bâti dont au moins l'une (3) est bloquée en rotation, des orifices d'entrée d'eau (8, 9) et au moins un orifice de sortie d'eau (13), et une autre plaque d'obturation (37) qui présente en surface un canal (12) prévu pour assurer des fonctions d'inversion, caractérisé en ce qu'il comporte encore une autre plaque d'obturation (38), pourvue de trous de passage (39, 40) pour l'eau et montée en appui sur la plaque fixe (3) de manière à pouvoir coulisser sur celle-ci, la plaque d'obturation (37) qui est pourvue en surface d'un canal (12) étant bloquée en rotation et associée à cette autre plaque (38), et pourvue en outre d'une chambre de mélange (42), la plaque d'obturation mobile (38) présentant une barrette (41) pour recouvrir les trous de passage de l'eau (8, 9) (Figs. 8, 9, 10).

3. Robinet sanitaire selon la revendication 1, caractérisé en ce qu'il comporte un organe de retenue (26) pour le levier (20) qui commande le coulissement de la plaque d'obturation mobile (4).

4. Robinet sanitaire selon la revendication 3, caractérisé en ce que l'organe de retenue (26) comporte un ressort qui présente une encoche (46) agencée pour retenir une collerette du levier engagée dans cette encoche.

5. Robinet sanitaire selon la revendication 4, caractérisé en ce qu'un doigt (45) est prévu pour pousser le ressort (26), afin de l'effacer hors de sa position de repos.

6. Robinet sanitaire selon la revendication 3, caractérisé en ce que l'organe de retenue comporte un ressort (47) pourvu d'un bec sur lequel est en appui un bec du levier (20) qui commande le coulissement de la plaque d'obturation mobile.

FIG.1

FIG.2

FIG.3

FIG.4

FIG.5

FIG.6

FIG.7

FIG. 8

FIG. 9

FIG. 10

FIG.12

FIG.11

FIG. 13

EP 0 309 443 B1

FIG.14

FIG.15

FIG.16

FIG. 17

FIG. 18